# EUROPEAN PATENT APPLICATION

(11) **EP 4 826 865 A1**
(43) Date of publication of application: **21.10.2026**
(21) Application number: 25222685.7
(22) Date of filing: 11.12.2025
(51) Int. Cl.: H01M 50/202, H01M 50/209, H01M 50/264, H01M 50/291, H01M 50/293

(54) **CELL STACK AND BATTERY PACK INCLUDING THE SAME**

(30) Priority: 18.04.2025 KR 20250050841
(71) Applicant: SAMSUNG SDI CO., LTD., Yongin-si, Gyeonggi-do 17084 (KR)
(72) Inventor: KIM, Jae Min, 16678 Suwon-si (KR)
(74) Representative: Marks & Clerk LLP

(57) **Abstract**

A cell stack and a battery pack are disclosed. A battery pack includes a housing, one or more cell stacks accommodated in the housing and including a plurality of battery cells arranged in a first direction, a plurality of partition frames arranged in parallel such that the cell stacks are arranged in the first direction, and an end frame coupled to the partition frame and facing the cell stack in the first direction.

## Description

### BACKGROUND

### 1. Field

Aspects of embodiments of the present disclosure relate to a cell stack and a battery pack including the same.

### 2. Discussion of Related Art

Generally, with the recent rapid spread of electronic devices that use batteries, such as mobile phones, notebook computers, and electric vehicles, the demand for secondary batteries with high energy densities and high capacities is rapidly increasing. Thus, research and development for improvement of the performance of lithium secondary batteries is actively underway.

A lithium secondary battery is a battery including a positive electrode and a negative electrode, each containing an active material capable of intercalation and deintercalation of lithium ions, and an electrolyte, and the lithium secondary battery produces electrical energy through oxidation and reduction reactions when the lithium ions are intercalated and deintercalated at the positive electrode and the negative electrode.

The above information disclosed in this Background section is provided for enhancement of understanding of the background of the present disclosure and may contain information that does not constitute related (or prior) art.

### SUMMARY

According to an aspect of embodiments of the present disclosure, a cell stack and a battery pack including the same are provided, which are capable of implementing various types of packs with a single housing, preventing (preventing or substantially preventing) heat diffusion by reducing an amount of heat transfer to adjacent battery cells if an event occurs through cooling performance maximization or increase, and improving lifetime performance.

These and other aspects and features of the present disclosure will be described in or will be apparent from the following description of some embodiments of the present disclosure.

According to one or more embodiments of the present disclosure, a cell stack includes a plurality of battery cells, and a cell carrier, the plurality of battery cells being accommodated in the cell carrier and arranged such that adjacent battery cells of the plurality of battery cells are spaced apart from each other in a first direction, wherein the cell carrier surrounds a corner of a battery cell of the plurality of battery cells.

The cell carrier may include first surfaces spaced apart from each other in the first direction to correspond to front and rear surfaces of the battery cell, a second surface formed in a direction perpendicular to the first surfaces to connect the first surfaces, and a third surface supporting a bottom surface of the battery cell, wherein openings may be formed in the first surfaces, the second surface, and the third surface.

The cell stack may further include insulating members attached to the front and rear surfaces of the battery cell through the openings formed in the first surfaces.

According to one or more embodiments of the present disclosure, a battery pack includes a housing, one or more cell stacks accommodated in the housing and including a plurality of battery cells arranged in a first direction, a plurality of partition frames arranged in parallel such that the cell stacks are arranged in the first direction, and an end frame coupled to the partition frame and facing the cell stack in the first direction.

The battery pack may further include a cell carrier provided along a perimeter of the battery cells such that the battery cells are spaced apart from each other.

The cell carrier may include first surfaces spaced apart from each other in the first direction to correspond to front and rear surfaces of a battery cell of the battery cells, a second surface extending in a direction perpendicular to the first surface to connect the first surfaces, and a third surface supporting a bottom surface of the battery cell, wherein openings may be formed in the first surfaces, the second surface, and the third surface.

A first pocket portion that is filled with a filler through the opening of the second surface may be defined between the cell carrier and the partition frame.

A second pocket portion that is filled with the filler through the opening of the third surface may be defined between the cell carrier and the housing.

The battery pack may further include a cooling plate arranged at a lower portion of the housing.

An inlet for filling the first pocket portion with the filler may be defined in the second surface of the cell carrier.

A communication portion configured to communicate the first pocket portion and the second pocket portion may be defined in the cell carrier.

The filler may include silicone.

The battery pack may further include insulating paper attached to each of the front and rear surfaces of the battery cell through the openings formed in the first surfaces.

The end frame and the partition frame may be configured as hollow tubes.

A coupling hole to which the partition frame is slidably coupled may be defined in the end frame.

The partition frame may have a length corresponding to a number of the battery cells.

The cell carrier may be slidably coupled by a slide portion in a longitudinal direction of the partition frame.

The slide portion may include a slide rail arranged in the longitudinal direction of the partition frame, and a slide groove defined in the second surface of the cell carrier to be insertable with the slide rail.

The slide rail may include a plurality of slide rails spaced apart from each other in the partition frame, and the slide groove may include a plurality of grooves spaced apart from each other to correspond to the slide rail on the second surface of the cell carrier.

An incised groove corresponding to the inlet may be defined in the slide rail.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings:
FIG. 1 is a schematic perspective view illustrating a configuration of a battery pack according to an embodiment of the present disclosure;
FIG. 2 is a schematic exploded perspective view illustrating the configuration of the battery pack of FIG. 1;
FIG. 3 is a schematic perspective view illustrating a configuration of a battery cell according to an embodiment of the present disclosure;
FIG. 4 is a schematic cross-sectional view illustrating the configuration of the battery cell of FIG. 3;
FIG. 5 is a schematic diagram illustrating a configuration of an electrode assembly according to an embodiment of the present disclosure;
FIG. 6 is a schematic diagram illustrating a configuration of a cell carrier according to an embodiment of the present disclosure;
FIG. 7 is a diagram illustrating a state in which the battery cell is coupled to the cell carrier according to an embodiment of the present disclosure;
FIG. 8 is a schematic front view illustrating the cell carrier in which the battery cell is inserted according to an embodiment of the present disclosure;
FIG. 9 is a schematic side view illustrating the cell carrier in which the battery cell is inserted according to an embodiment of the present disclosure;
FIG. 10 is a schematic bottom view illustrating the cell carrier in which the battery cell is inserted according to an embodiment of the present disclosure;
FIG. 11 is a schematic diagram illustrating attachment of an adhesive member through an opening of the cell carrier according to an embodiment of the present disclosure;
FIG. 12 is a diagram illustrating a slide coupling of the cell carrier according to an embodiment of the present disclosure;
FIG. 13 is a diagram illustrating a coupling of a partition frame and an end frame according to an embodiment of the present disclosure;
FIG. 14 is an enlarged view of main parts illustrating a slide coupling state of the cell carrier according to an embodiment of the present disclosure;
FIG. 15 is a schematic cross-sectional view illustrating a pocket portion according to an embodiment of the present disclosure;
FIG. 16 is a schematic diagram illustrating filling with a filler according to an embodiment of the present disclosure;
FIG. 17 is an enlarged view of main parts illustrating an inlet of the cell carrier according to an embodiment of the present disclosure;
FIG. 18 is a schematic diagram illustrating a slide rail of the partition frame according to an embodiment of the present disclosure;
FIG. 19 is a diagram illustrating an incised groove for filling with the filler according to an embodiment of the present disclosure;
FIG. 20 is a schematic diagram illustrating heat transfer of the battery pack according to an embodiment of the present disclosure; and
FIG. 21 is a schematic diagram illustrating a process of forming the battery pack according to an embodiment of the present disclosure.

### DETAILED DESCRIPTION

Herein, some embodiments of the present disclosure will be described in further detail with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc., may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc., may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc., as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

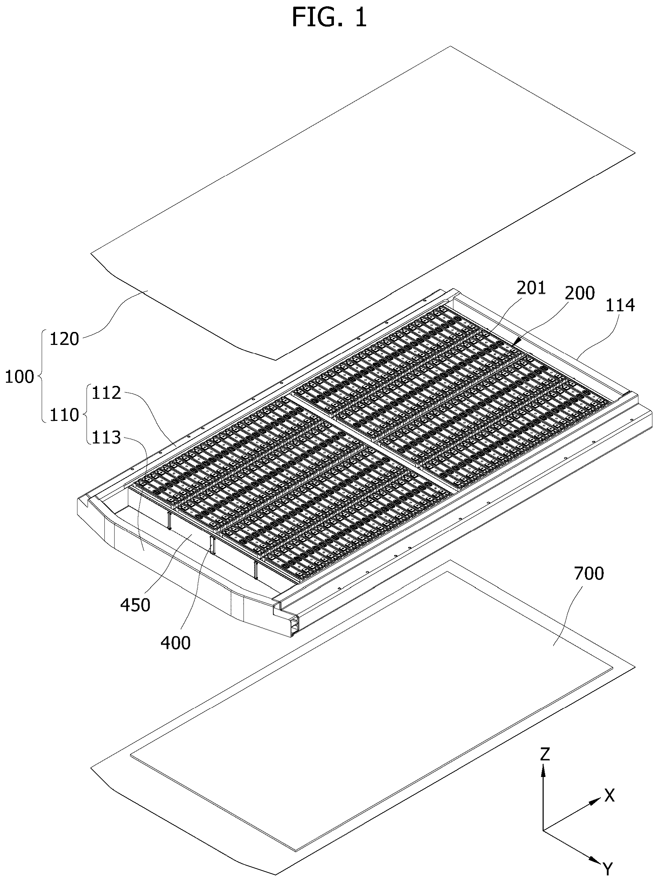

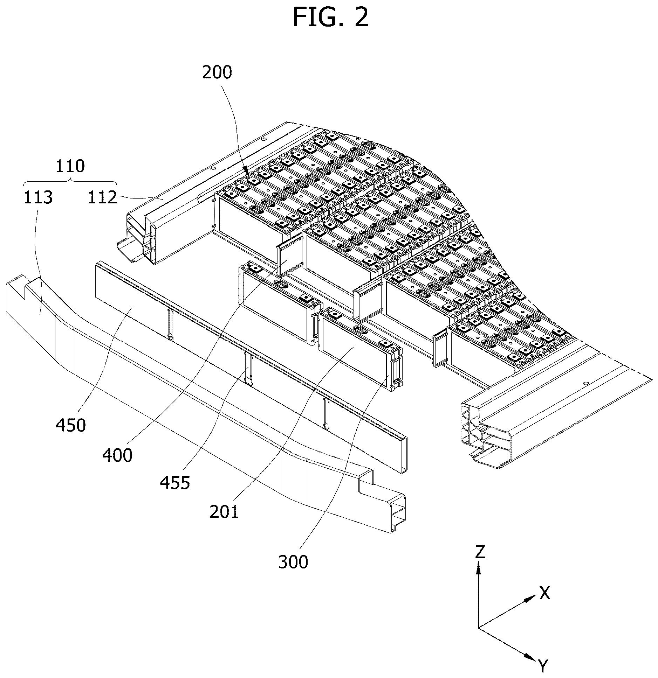

FIG. 1 is a schematic perspective view illustrating a configuration of a battery pack according to an embodiment of the present disclosure; and FIG. 2 is a schematic exploded perspective view illustrating the configuration of the battery pack of FIG. 1.

Referring to FIGS. 1 and 2, a battery pack according to an embodiment may include a housing 100, a cell stack 200, a partition frame 400, and an end frame 450.

The housing 100 forms a general exterior of the battery pack and may provide a space in which the cell stack 200 may be accommodated. The housing 100 may protect the cell stack 200 from an external impact and foreign materials.

The housing 100 may include a housing body 110.

The housing body 110 may include a pair of side frames 112 parallel in a first direction, a front frame 113 coupled to a first end of the side frame 112, and a rear frame 114 coupled to a second end of the side frame 112.

The housing body 110 may be formed to have a shape of a box with an interior that is hollow and a side that is open. For example, the open side of the housing body 110 may be disposed so as to be perpendicular to a third direction and face upward based on FIG. 1. However, a cross-sectional shape of the housing body 110 is not limited to the shape shown in FIG. 1 and may have any of various shapes, such as any of a polygonal shape, a circular shape, and an elliptical shape.

The housing 100 according to an embodiment may further include a housing cover 120.

The housing cover 120 may be coupled to the housing body 110 and may close an interior space of the housing body 110. For example, the housing cover 120 may be formed to have a generally bar or plate shape. The housing cover 120 may be disposed to face an upper surface of the housing body 110 in the third direction. The housing cover 120 may be fixed to an upper end of the housing body 110 by any of various types of coupling methods, such as any of bolting, welding, and fitting.

The cell stack 200 may be disposed inside the housing 100. In an embodiment, the cell stack 200 may be formed as a plurality of cell stacks 200.

Herein, an example in which a plurality of cell stacks 200 is formed will be described, but the present disclosure is not limited thereto, and, in an embodiment, a single cell stack 200 may be formed. Each cell stack 200 may be individually disposed in the interior space of the housing body 110, which is partitioned by a partition frame 400 and an end frame 450 which are described below. For example, each cell stack 200 may be individually disposed inside a space surrounded by a pair of partition frames 400 and a pair of end frames 450.

Each cell stack 200 may include a battery cell 201.

The battery cell 201 may function as a unit structure that stores and supplies power in the battery pack. The battery cell 201 may be provided as a plurality of battery cells 201. The plurality of battery cells 201 may be disposed in the first direction. However, an arrangement of the plurality of battery cells 201 is not limited thereto, and the plurality of battery cells 201 may be disposed in a plurality of rows in a second direction or in a plurality of rows in the first direction and the second direction.

The plurality of battery cells 201 may be electrically connected by one or more bus bars (not shown). The plurality of battery cells 201 may be connected in various ways, such as in series, in parallel, or a combination of series and parallel, by the bus bar.

Herein, an example in which the battery cell 201 is a prismatic lithium ion secondary battery will be described below. However, the present disclosure is not limited thereto, and the battery cell 201 may be a lithium polymer battery or a cylindrical battery, for example.

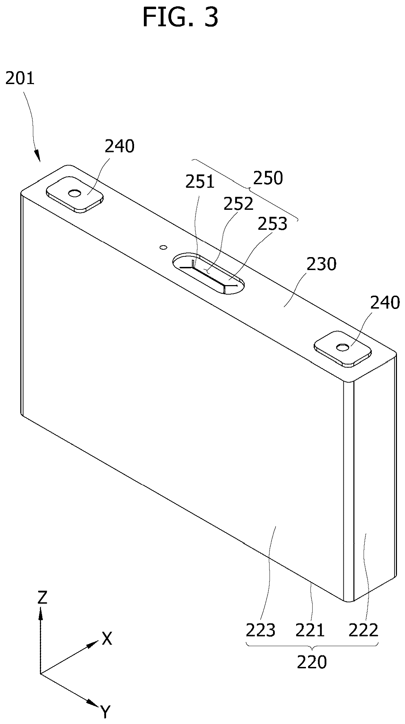

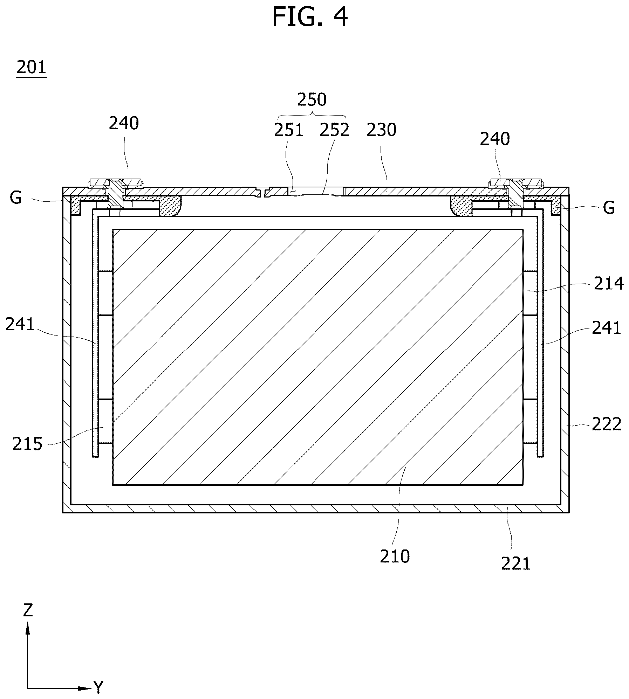

FIG, 3 is a schematic perspective view illustrating a configuration of a battery cell according to an embodiment of the present disclosure; and FIG. 4 is a schematic cross-sectional view illustrating the configuration of the battery cell of FIG. 3.

Referring to FIGS. 1 to 4, the battery cell 201 according to an embodiment includes an electrode assembly 210, a case 220, a cap plate 230, a terminal 240, and a vent 250.

The electrode assembly 210 may function as a unit structure that performs charging and discharging operations of power in the battery cell 201. The electrode assembly 210 may be accommodated inside the case 220.

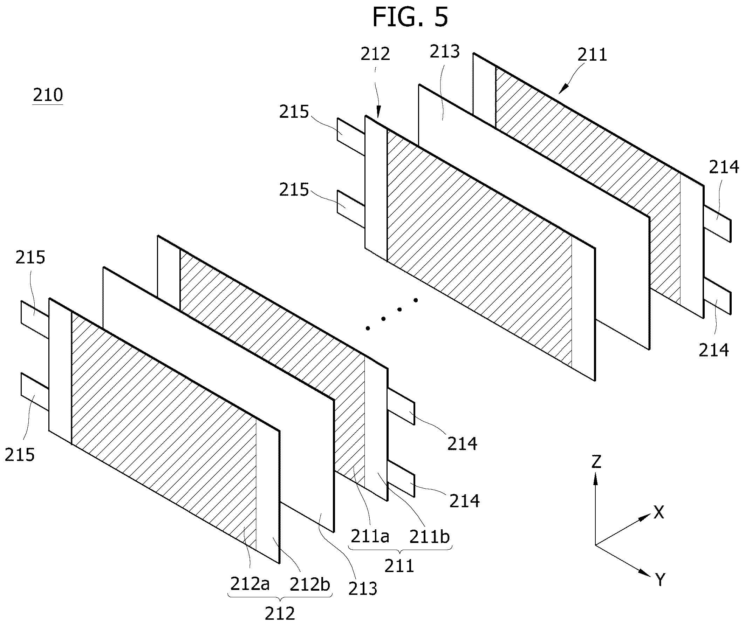

FIG. 5 is a schematic diagram illustrating a configuration of an electrode assembly according to an embodiment of the present disclosure.

Referring to FIGS. 1 to 5, the electrode assembly 210 according to an embodiment may include a first electrode 211, a second electrode 212, and a separator 213.

Herein, an example in which the electrode assembly 210 is formed in a stack type in which a plurality of first electrodes 211, a plurality of second electrodes 212, and a plurality of separators 213 are alternately stacked in the first direction. However, the electrode assembly 210 is not limited thereto and may be formed in a jelly roll type in which the first electrode 211, the second electrode 212, and the separator 213 are sequentially stacked and wound around a winding axis.

In an embodiment, the first electrode 211 may be a positive electrode of the electrode assembly 210.

The first electrode 211 according to an embodiment may be formed to have a shape of a foil including a metal material, such aluminum or an aluminum alloy. Both, or opposite, surfaces of the first electrode 211 may be disposed perpendicular to the first direction. The first electrode 211 is not particularly limited in type, size, or shape as long as it is conductive and does not cause a chemical change in the secondary battery. A shape of the first electrode 211 may be designed to have various shapes in addition to a rectangular shape.

The first electrode 211 may be provided as a plurality of first electrodes 211. The plurality of first electrodes 211 may be disposed in the first direction. The number of the first electrode 211 may be varied in various ways according to a charging capacity of the battery cell 201.

The first electrode 211 may include a first active material layer 211a.

The first active material layer 211a may be provided in a form of being applied to at least a portion of the first electrode 211. The first active material layer 211a may be applied to both, or opposite, surfaces of the first electrode 211, or may be applied to only one surface of the first electrode 211.

In an embodiment, the first electrode 211 is a positive electrode, and the first active material layer 211a may include a positive electrode active material.

The positive electrode active material may be a compound capable of reversible intercalation and deintercalation of lithium (lithiated intercalation compound). In an embodiment, one or more compound oxides of lithium and a metal selected from cobalt, manganese, nickel, iron, and a combination thereof may be used.

For example, the positive electrode active material may include at least one of lithium-iron-phosphorus oxides (LiFePO₄ and LFP), lithium-manganese-iron-phosphorus oxides (LiMnFePO₄ and LMFP), and lithium-nickel-cobalt-manganese oxides (LiNixCoyMnzO₂ and NCM). Here, 0<x<1, 0<y<1, 0<z<1, and x+y+z=1 may be satisfied. The positive electrode active material may include one of the lithium-iron-phosphorus oxides (LiFePO₄ and LFP), the lithium-manganese-iron-phosphorus oxides (LiMnFePO₄ and LMFP), and the lithium-nickel-cobalt-manganese oxides (LiNixCoyMnzO₂ and NCM) or may include two or all of the lithium-iron-phosphorus oxides (LiFePO₄ and LFP), the lithium-manganese-iron-phosphorus oxides (LiMnFePO₄ and LMFP), and the lithium-nickel-cobalt-manganese oxides (LiNixCoyMnzO₂ and NCM).

The first active material layer 211a may further include a positive electrode conductive material.

The positive electrode conductive material imparts conductivity to the first active material layer 211a, and any suitable material that does not cause a chemical change and is electrically conductive may be used. Examples of the positive electrode conductive material may include carbon-based materials, such as natural graphite, artificial graphite, carbon black, acetylene black, Ketjen black, carbon fiber, carbon nanofiber, and carbon nanotube, metal-based materials in the form of metal powder or metal fiber containing copper, nickel, aluminum, and silver, a conductive polymer, such as polyphenylene derivative, or a mixture thereof.

The first active material layer 211a may further include a positive electrode binder.

The positive electrode binder may bond particles constituting the positive electrode active material well to each other and also attach the positive electrode active material well to the first electrode 211.

Examples of positive electrode binders are non-aqueous binders, aqueous binders, dry binders, or a combination thereof.

Examples of the non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, and a combination thereof.

The aqueous binder may be one selected from Styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, Poly(meth)acrylonitrile, ethylene propylene diene copolymer, polyvinylpyridine, chlorosulfonated polyethylene, latex, polyester resin, (meth)acrylic resin, phenol resin, epoxy resin, polyvinyl alcohol, and a combination thereof.

When an aqueous binder is used as a positive binder, a cellulose-based compound capable of imparting viscosity may be further included. One or more of carboxymethyl cellulose, hydroxypropylmethyl cellulose, methyl cellulose, or alkali metal salts thereof can be mixed and used as the cellulose-based compound. In an embodiment, Na, K, or Li may be used as the alkali metal.

The dry binder is a polymer material capable of being fiberized and may be, for example, polytetrafluoroethylene, polyvinylidene fluoride, polyvinylidene fluoride-hexafluoropropylene copolymer, polyethylene oxide, or a combination thereof.

The first electrode 211 may include a first uncoated portion 211b on which the first active material layer 211a is not applied. The first uncoated portion 211b according to an embodiment may be disposed at a first end region of the first electrode 211 facing the second direction. However, the first uncoated portion 211b is not limited to this shape and, in an embodiment, may be formed in an entire edge region of the first electrode 211.

In an embodiment, the second electrode 212 may be a negative electrode of the electrode assembly 210.

The second electrode 212 according to an embodiment may be formed to have a shape of a foil including a metal material, such as copper, a copper alloy, nickel, or a nickel alloy. Both, or opposite, surfaces of the second electrode 212 may be disposed perpendicular to the first direction. The second electrode 212 is not particularly limited in type, size, or shape as long as it is conductive and does not cause a chemical change in the secondary battery. The design of the cross-sectional shape of the second electrode 212 may be varied to have any of various shapes in addition to the rectangular shape shown in FIG. 4.

The second electrode 212 may be provided as a plurality of second electrodes 212. The plurality of second electrodes 212 may be disposed in the first direction. The plurality of first electrodes 211 and the plurality of second electrodes 212 may be disposed alternately in the first direction.

The second electrode 212 may include a second active material layer 212a and a second uncoated portion 212b.

The second active material layer 212a may be provided in a form of being applied to at least a portion of the second electrode 212. The second active material layer 212a may be applied to both, or opposite, surfaces of the second electrode 212, or may be applied to only one surface of the second electrode 212.

In an embodiment, the second electrode 212 is a negative electrode, and the second active material layer 212a may include a negative electrode active material.

A negative electrode active material may include a material capable of reversibly intercalating/deintercalating lithium ions, lithium metal, an alloy of lithium metal, a material capable of being doped and dedoped with lithium, or a transition metal oxide.

A material capable of reversibly intercalating/deintercalating lithium ions may include a carbon-based negative electrode active material and may include, for example, crystalline carbon, amorphous carbon, or a combination thereof. Examples of the crystalline carbon may include graphite, such as amorphous, plate-shaped, flake, spherical or fibrous natural graphite or artificial graphite, and examples of the amorphous carbon may include soft carbon or hard carbon, and mesophase pitch carbide, and calcined coke.

An alloy of lithium and a metal selected from Na, K, Rb, Cs, Fr, Be, Mg, Ca, Sr, Si, Sb, Pb, In, Zn, Ba, Ra, Ge, Al and Sn may be used as the alloy of lithium metal.

A Si-based negative electrode active material or a Sn-based negative electrode active material may be used as a material that can be doped and dedoped with lithium. The Si-based negative electrode active material may be silicon, silicon-carbon composite, SiOₓ (0<x≤2), a Si-Q alloy (Q is an alkali metal), alkaline earth metal, a group 13 element, a group 14 element (excluding Si), a group 15 element, a group 16 element, a transition metal, a rare earth elements, or a combination thereof. In an embodiment, the Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may have a form containing silicon particles and amorphous carbon coted on surfaces of the silicon particles. For example, the silicon-carbon composite may include a secondary particle (core) in which silicon primary particles are assembled and an amorphous carbon coating layer (shell) positioned on a surface of the secondary particle. The amorphous carbon may also be positioned between the silicon primary particles and, for example, the silicon primary particles may be coated with amorphous carbon. The secondary particles may be present by being dispersed in an amorphous carbon matrix.

The silicon-carbon composite may further include crystalline carbon. For example, the silicon-carbon composite may include a core containing crystalline carbon and silicon particles and an amorphous carbon coating layer positioned on a surface of the core.

A Si-based negative electrode active material or a Sn-based negative electrode active material may be used by mixing a carbon-based negative electrode active material.

The second active material layer 212a may further include a negative electrode conductive material and a negative electrode binder.

The negative electrode conductive material imparts conductivity to the second active material layer 212a, and any suitable material that does not cause a chemical change and is electrically conductive may be used. Examples of the negative electrode conductive material may include carbon-based materials, such as natural graphite, artificial graphite, carbon black, acetylene black, Ketjen black, carbon fiber, carbon nanofiber, and carbon nanotube, metal-based materials in the form of metal powder or metal fiber containing copper, nickel, aluminum, and silver, a conductive polymer, such as polyphenylene derivative, or a mixture thereof.

The negative electrode binder may bond particles constituting the negative electrode active material well to each other and also attach the negative electrode active material well to the second electrode 212.

Examples of negative electrode binders use non-aqueous binders, aqueous binders, dry binders, or a combination thereof.

Examples of the non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, and a combination thereof.

The aqueous binder may be one selected from Styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, Poly(meth)acrylonitrile, ethylene propylene diene copolymer, polyvinylpyridine, chlorosulfonated polyethylene, latex, polyester resin, (meth)acrylic resin, phenol resin, epoxy resin, polyvinyl alcohol, and a combination thereof.

If an aqueous binder is used as a negative binder, a cellulose-based compound capable of imparting viscosity may be further included. One or more of carboxymethyl cellulose, hydroxypropylmethyl cellulose, methyl cellulose, or alkali metal salts thereof can be mixed and used as the cellulose-based compound. In an embodiment, Na, K, or Li may be used as the alkali metal.

The dry binder is a polymer material capable of being fiberized and may be, for example, polytetrafluoroethylene, polyvinylidene fluoride, polyvinylidene fluoride-hexafluoropropylene copolymer, polyethylene oxide, or a combination thereof.

The second electrode 212 may include a second uncoated portion 212b on which the second active material layer 212a is not applied. The second uncoated portion 212b according to an embodiment may be disposed in an end region of the second electrode 212. However, the second uncoated portion 212b is not limited to this shape and, in an embodiment, may be formed in the entire edge region of the second electrode 212.

The separator 213 may be disposed between the first electrode 211 and the second electrode 212. The separator 213 may prevent or substantially prevent a short circuit between the first electrode 211 and the second electrode 212 while allowing movement of lithium ions between the first electrode 211 and the second electrode 212. The separator 213 may be disposed to surround (e.g., entirely surround) a surface region of the electrode assembly 210. Accordingly, the separator 213 may prevent or substantially prevent the first electrode 211 and the second electrode 212 from being directly exposed to the outside of the electrode assembly 210.

Polyethylene, polypropylene, polyvinylidene fluoride, or a multilayer membrane of two or more layers thereof may be used as the separator 213. In an embodiment, mixed multilayer membranes, such as a polyethylene/polypropylene two-layer separator, a polyethylene/polypropylene/polyethylene three-layer separator, and a polypropylene/polyethylene/polypropylene three-layer separator, may be used.

The separator 213 may include a porous base material and a coating layer containing an organic material, an inorganic material, or a combination thereof positioned on one or both, or opposite, surfaces of the porous base material.

The porous base material may be a polymer selected from polyolefin, such as polyethylene and polypropylene, polyester, such as polyethylene terephthalate and polybutylene terephthalate, polyacetal, polyamide, polyimide, polycarbonate, polyether ketone, polyaryl ether ketone, polyetherimide, polyamideimide, polybenzimidazole, polyethersulfone, polyphenylene oxide, cyclic olefin copolymer, polyphenylene sulfide, polyethylene naphthalate, glass fiber, and polytetrafluoroethylene (e.g., Teflon), or a polymer membrane formed from a copolymer or mixture of two or more thereof.

The organic material may include a polyvinylidene fluoride-based polymer or a (meth)acrylic-based polymer.

The inorganic material may include an inorganic particle selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic and inorganic materials may be mixed and present in a single coating layer or may be present in form in which a coating layer containing the organic material and a coating layer containing the inorganic material are stacked.

The electrode assembly 210 according to an embodiment may further include a first tab 214 and a second tab 215.

The first tab 214 may be connected to the first electrode 211.

The first tab 214 according to an embodiment may have a form of a foil extending in a direction parallel to the second direction from the first uncoated portion 211b of the first electrode 211. The first tab 214 may have a generally rectangular shape. However, a shape of the first tab 214 is not limited thereto, and may be varied in various ways.

In an embodiment, the first tab 214 may be formed integrally with the first electrode 211. For example, the first tab 214 may be a remaining region of the first uncoated portion 211b that remains after cutting or removing a portion of the first uncoated portion 211b by notching processing or the like. In an embodiment, the first tab 214 may be manufactured separately from the first electrode 211 and then connected to the first uncoated portion 211b by welding or the like. In an embodiment, a material of the first tab 214 may be the same as a material of the first electrode 211.

The first tab 214 may be provided as a plurality of first tabs 214. Each first tab 214 may extend individually from the first uncoated portion 211b of the different first electrode 211. Adjacent first tabs 214 may be disposed to face each other in the first direction. That is, the plurality of first tabs 214 may be disposed in the first direction. The adjacent first tabs 214 may be disposed parallel to each other. The adjacent first tabs 214 may be in contact with each other and may also be spaced apart from each other by as much as a thickness of the separator 213.

The plurality of first tabs 214 may be provided on each first electrode 211. For example, a pair of first tabs 214 may be formed on each first electrode 211. The pair of first tabs 214 formed on each first electrode 211 may be disposed in the third direction.

The second tab 215 may be connected to the second electrode 212.

The second tab 215 according to an embodiment may have a form of a foil extending in a direction parallel to the second direction from the second uncoated portion 212b of the second electrode 212. The extension directions of the first tab 214 and the second tab 215 may be opposite to each other. The second tab 215 may have a generally rectangular shape. However, a shape of the second tab 215 is not limited thereto, and may be varied in various ways.

In an embodiment, the second tab 215 may be formed integrally with the second electrode 212. For example, the second tab 215 may be a remaining region of the second uncoated portion 212b that remains after cutting or removing a portion of the second uncoated portion 212b by notching processing or the like. In an embodiment, the second tab 215 may be manufactured separately from the second electrode 212 and then connected to the second uncoated portion 212b by welding or the like. In an embodiment, a material of the second tab 215 may be the same as a material of the second electrode 212.

The second tab 215 may be provided as a plurality of second tabs 215. Each second tab 215 may extend individually from the second uncoated portion 212b of the different second electrode 212. Adjacent second tabs 215 may be disposed to face each other in the first direction. That is, the plurality of second tabs 215 may be disposed in the first direction. The adjacent second tabs 215 may be disposed parallel to each other. The adjacent second tabs 215 may be in contact with each other and may also be spaced apart from each other by as much as the thickness of the separator 213.

The plurality of second tabs 215 may be provided on each second electrode 212. For example, a pair of second tabs 215 may be formed on each second electrode 212. The pair of second tabs 215 formed on each second electrode 212 may be disposed in the third direction.

The case 220 generally forms an exterior of the battery cell 201 and may accommodate the electrode assembly 210. In an embodiment, the case 220 may include a conductive metal material, such as aluminum, an aluminum alloy, or a nickel-plated steel.

The case 220 according to an embodiment may include a bottom portion 221, a first side portion 222, and a second side portion 223.

The bottom portion 221 may form a lower exterior of the case 220. The bottom portion 221 according to the present embodiment may have a shape of a rectangular plate. The bottom portion 221 may be disposed to face a bottom surface of the housing body 110. The bottom portion 221 may be disposed to face the bottom surface of the housing body 110 in the third direction.

The first side portion 222 may extend from the bottom portion 221 and may form a portion of a side exterior of the case 220.

The first side portion 222 according to an embodiment may have a shape of a rectangular plate extending from the bottom portion 221 in a direction parallel to the third direction. The first side portion 222 may be disposed perpendicular to the second direction. A lower end portion of the first side portion 222 may be connected to an edge of the bottom portion 221 disposed parallel to the first direction. An upper end portion of the first side portion 222 may be disposed toward the housing cover 120. The upper end portion of the first side portion 222 may be disposed to face the housing cover 120 in the third direction.

The first side portion 222 may be provided as a pair of first side portions 222. The pair of first side portions 222 may be disposed to be spaced by a distance (e.g., a predetermined interval) from and face each other in the second direction. In an embodiment, the pair of first side portions 222 may be disposed parallel to each other.

The second side portion 223 may extend from the bottom portion 221 and may form a remaining portion of the side exterior of the case 220.

The second side portion 223 according to an embodiment may have a shape of a rectangular plate extending from the bottom portion 221 in a direction parallel to the third direction. The second side portion 223 may be disposed to intersect the first side portion 222. For example, the second side portion 223 may be disposed perpendicular to the first direction.

A lower end portion of the second side portion 223 may be connected to the edge of the bottom portion 221 disposed parallel to the second direction. An upper end portion of the second side portion 223 may be disposed toward the housing cover 120. The upper end portion of the second side portion 223 may be disposed to face the housing cover 120 in the third direction.

An area of the second side portion 223 may be greater than an area of the first side portion 222.

The second side portion 223 may be provided as a pair of second side portions 223. The pair of second side portions 223 may be disposed to be spaced by a distance (e.g., a predetermined interval) from and face each other in the first direction. In an embodiment, the pair of second side portions 223 may be disposed parallel to each other.

Accordingly, the case 220 according to an embodiment may be formed to have a rectangular parallelepiped shape with an open upper end portion facing the housing cover 120.

The cap plate 230 may be coupled to the case 220 and may seal the case 220.

The cap plate 230 according to an embodiment may be formed to have a flat plate shape. The cap plate 230 may be disposed to face the case 220 in the third direction. For example, an inner surface of the cap plate 230 may be disposed to face the open upper surface of the case 220. An outer surface of the cap plate 230 may be disposed to face an inner surface of the housing cover 120. In an embodiment, the cap plate 230 may be disposed parallel to the bottom portion 221 of the case 220 and the housing cover 120.

The cap plate 230 may be seated on the upper end portions of the second side portions 223 and the first side portions 222. In an embodiment, the cap plate 230 may be inserted inside the case 220, and a peripheral surface of the cap plate 230 may be in contact with inner surfaces of the second side portions 223 and the first side portions 222. The cap plate 230 may be coupled to the upper end portions of the second side portions 223 and the first side portions 222 by any of various types of coupling methods, such as any of welding, bolting, and fitting.

The terminal 240 may be coupled to the cap plate 230 and may protrude outward from the cap plate 230. The terminal 240 may be electrically connected to the electrode assembly 210.

The terminal 240 according to an embodiment may pass through the cap plate 230 in the third direction. An upper end portion part of the terminal 240 may protrude outward from the cap plate 230, and a lower end portion of the terminal 240 may protrude inward the case 220. However, a specific shape of the terminal 240 is not limited to the shape shown in FIGS. 2 to 3, and various shapes are possible.

The terminal 240 may be formed of an electrically conductive material, such as aluminum, nickel, copper, etc.

The terminal 240 may be provided as a pair of terminals 240. The pair of terminals 240 may be disposed to be spaced by a distance (e.g., a predetermined interval) from each other on the cap plate 230 in the second direction.

The pair of terminals 240 may be individually connected to the first electrode 211 and the second electrode 212 of the electrode assembly 210. Accordingly, the pair of terminals 240 may function as a positive electrode terminal and a negative electrode terminal of the battery cell 201.

For example, any one of the pair of terminals 240 may be connected to the first tab 214. The terminal 240 of any one of the pair of terminals 240 may be indirectly connected to the first tab 214 through a current collector 241 welded to the first tab 214, or the terminal 240 may be directly connected to the first tab 214.

In addition, the remaining terminal 240 of the pair of terminals 240 may be connected to the second tab 215. The remaining terminal 240 of the pair of terminals 240 may be indirectly connected to the second tab 215 through the current collector 241 welded to the second tab 215, or the terminal 240 may be directly connected to the second tab 215.

An insulator G may be installed between the electrode assembly 210 and the cap plate 230. The insulator G may be provided as a pair of insulators G. The pair of insulators G may be spaced apart from each other between the electrode assembly 210 and the cap plate 230 in the second direction. The pair of insulators G may be disposed to individually surround different terminals 240. The insulator G may be formed of an insulating material, such as polyethylene (PE), polypropylene (PP), polyethylene terephthalate (PET), rubber, etc.

The vent 250 is provided on the cap plate 230 and may be opened and closed depending on an internal pressure of the case 220. The vent 250 may provide an exhaust path for gas, flame, smoke, etc., generated inside the case 220 if the internal pressure of the case 220 rises to a set level or more due to overcurrent, thermal runaway, etc. In an embodiment, the vent 250 may be disposed between a pair of terminals. As will be described below, a longitudinal direction of the vent 250 may be a direction parallel to the second direction, and a width direction of the vent 250 may be a direction parallel to the first direction.

The vent 250 may include a vent hole 251 and a vent plate 252.

The vent hole 251 may be formed to have a shape of a hole passing through the cap plate 230 in the third direction. A lower side of the vent hole 251 may be connected to an inner space of the case 220. An upper side of the vent hole 251 may be connected to an outer space of the cap plate 230. A cross-sectional shape of the vent hole 251 may have any of various shapes, such as any of an elliptical shape, a circular shape, and a polygonal shape.

The vent plate 252 may be opened and closed in response to a change in internal pressure of the cell case 220. That is, if the battery cell 201 operates normally, the vent plate 252 may maintain a closed state to seal the cell case 220. If the internal pressure of the cell case 220 rises to a certain level (e.g., a set level) or more due to overcharging or a fire of the battery cell 201, the vent plate 252 may be opened and may discharge flames, gases, and smoke from an inside of the cell case 220 to the outside of the cell case 220.

The vent plate 252 according to an embodiment may be formed to have a flat plate shape. The vent plate 252 may be disposed to face the vent hole 251 in the third direction. In an embodiment, a thickness of the vent plate 252 may be smaller than a thickness of the cap plate 230. An upper surface of the vent plate 252 may be fixed to a lower surface of the cap plate 230 through any of various types of coupling methods, such as any of welding, bolting, and fitting. In an embodiment, the vent plate 252 may be inserted into an inside of the vent hole 251, and a peripheral surface of the vent plate 252 may be coupled to an inner surface of the vent hole 251.

A vent notch 253 may be formed in the vent plate 252 to induce a rupture operation of the vent plate 252. The vent notch 253 according to an embodiment may have a shape of a groove that is concavely recessed from an outer surface of the vent plate 252 to an inner side of the vent plate 252. However, a shape of the vent notch 253 is not limited to the shape shown in FIG. 3 and may have any of various patterns on the vent plate 252.

The cell stack 200 may include a cell carrier 300 into which each battery cell 201 is inserted.

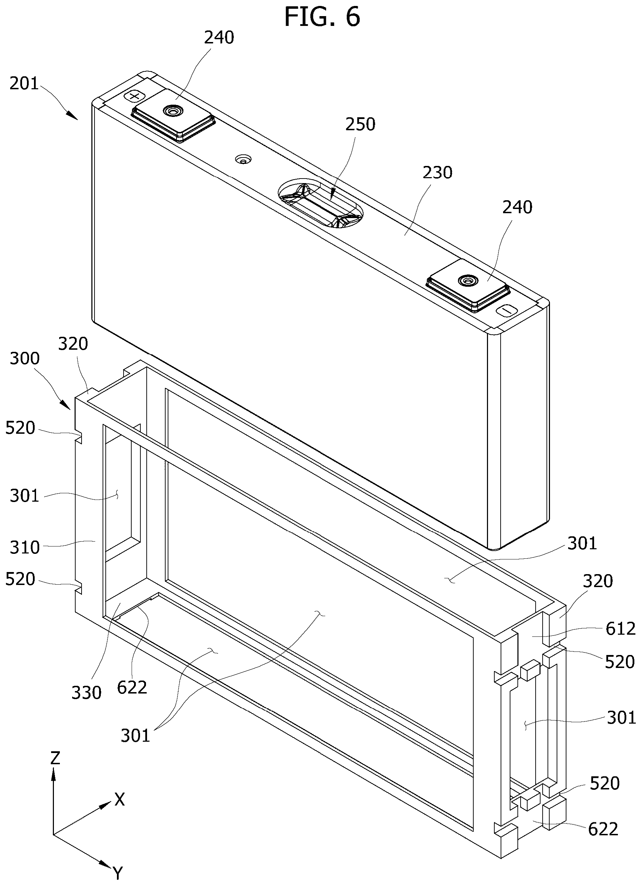

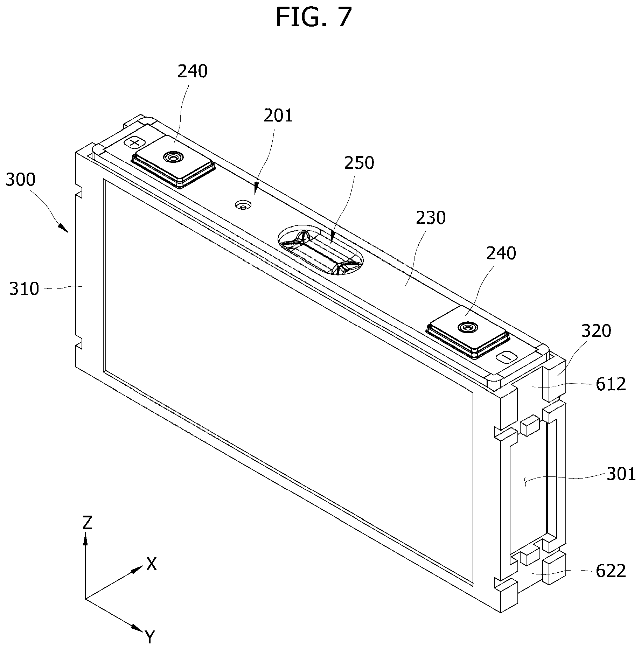

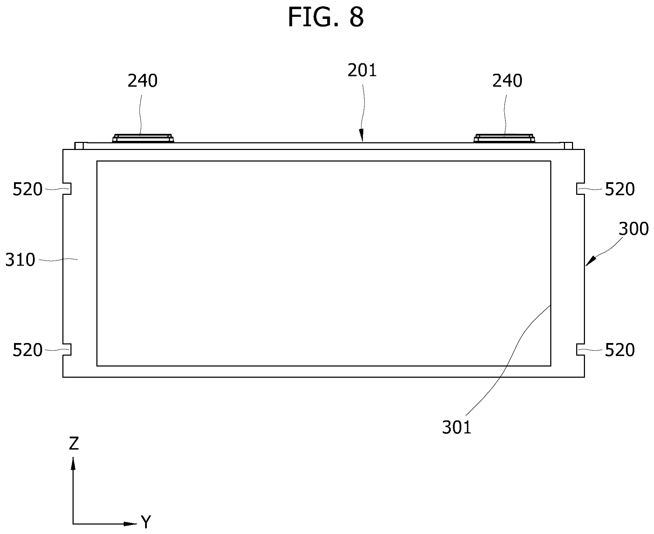

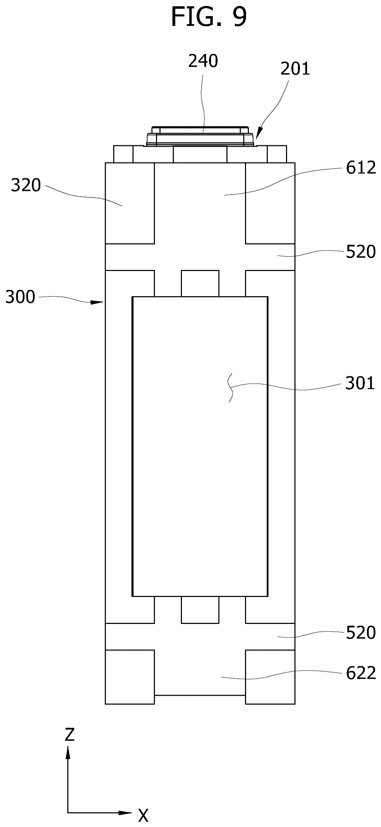

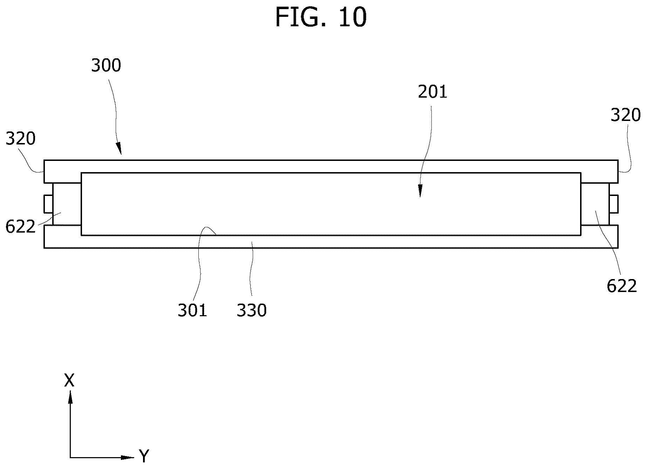

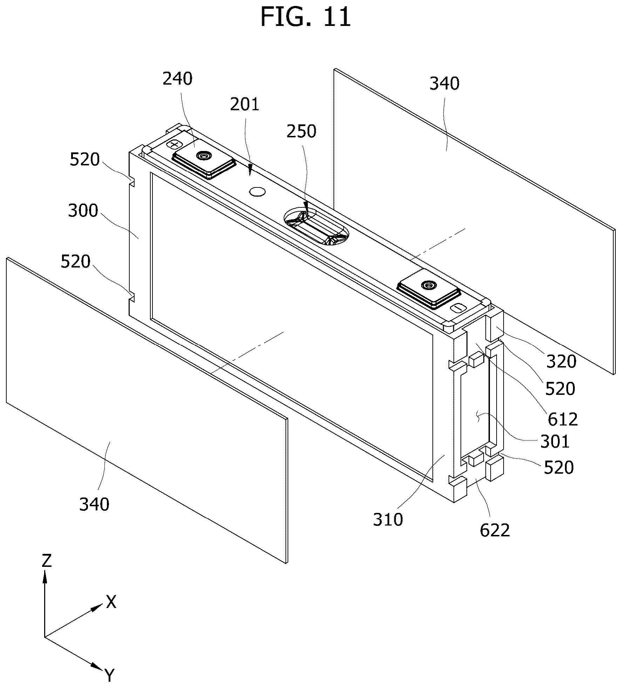

FIG. 6 is a schematic diagram illustrating a configuration of a cell carrier according to an embodiment of the present disclosure; FIG. 7 is a diagram illustrating a state in which the battery cell is coupled to the cell carrier according to an embodiment of the present disclosure; FIG. 8 is a schematic front view illustrating the cell carrier in which the battery cell is inserted according to an embodiment of the present disclosure; FIG. 9 is a schematic side view illustrating the cell carrier in which the battery cell is inserted according to an embodiment of the present disclosure; FIG. 10 is a schematic bottom view illustrating the cell carrier in which the battery cell is inserted according to an embodiment of the present disclosure; and FIG. 11 is a schematic diagram illustrating attachment of an adhesive member through an opening of the cell carrier according to an embodiment of the present disclosure.

Referring to FIGS. 1 to 11, the cell carrier 300 according to an embodiment may cover the peripheral surface of each battery cell 201 and separate each battery cell 201 from adjacent battery cells 201.

For example, the cell carrier 300 may be formed to surround a corner of the battery cell 201. In an embodiment, the cell carrier 300 may include a pair of first surfaces 310 disposed to be spaced apart from each other to correspond to front and rear surfaces of the battery cell 201 in the first direction, a second surface 320 formed in a direction perpendicular to the first surfaces 310 to connect the first surfaces 310, and a third surface 330 supporting a bottom surface of the battery cell 201.

Openings 301 may be formed in the first surfaces 310, the second surface 320, and the third surface 330. Accordingly, as shown in FIGS. 6 and 7, the cell carrier 300 may be formed in a rectangular parallelepiped shape that surrounds a corner formed by the front surface and the side surface of the battery cell 201 and a corner formed by the front surface and the bottom surface of the battery cell 201.

In an embodiment, insulating members 340 may be attached to the front and rear surfaces of the battery cell 201 through the openings 301 formed in the first surfaces 310.

The insulating member 340 may prevent or substantially prevent a short circuit by blocking an electrical contact that may occur between the battery cells 201 and prevent or substantially prevent heat generated in the battery cell 201 from being transferred to an adjacent battery cell 201, thereby preventing or substantially preventing thermal runaway from spreading. In addition, the insulating member 340 may function as a physical buffer between the battery cells 201 and prevent or substantially prevent the battery cells 201 together with the cell carrier 300 from being damaged due to a vibration or impact.

In an embodiment, the insulating member 340 may be made of an aramid fiber, ceramic-coated insulating paper, polymer film, aerogel, etc.

The battery cell 201 inserted into the cell carrier 300 may be disposed in the first direction to form the cell stack 200. The cell stack 200 disposed as described above may be arranged along the partition frame 400 provided in the housing 100.

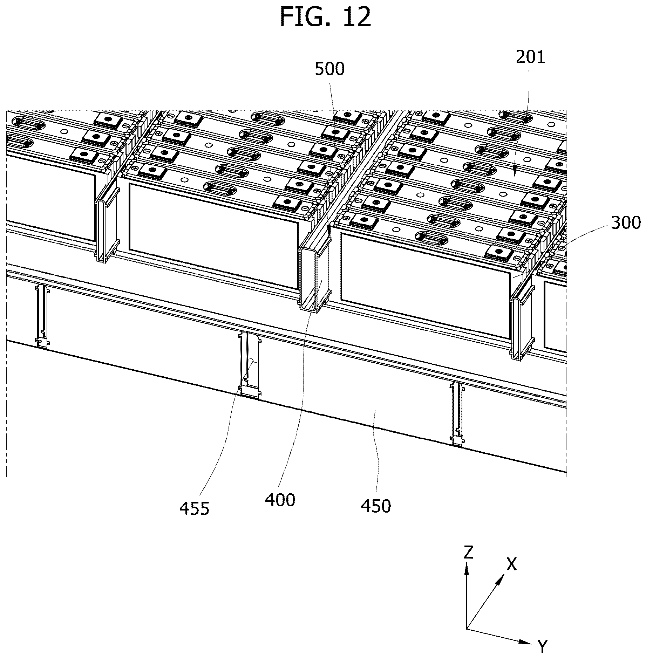

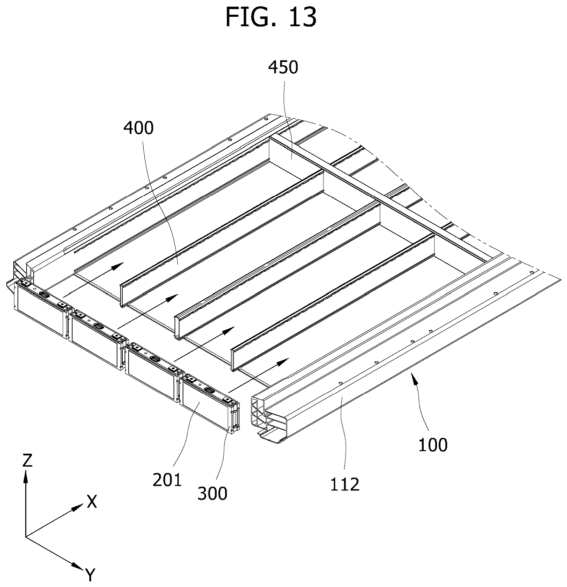

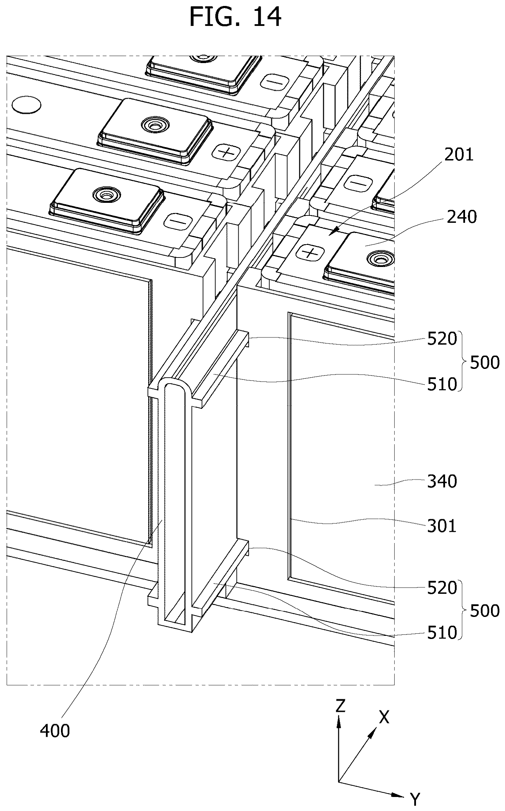

FIG. 12 is a diagram illustrating a slide coupling of the cell carrier according to an embodiment of the present disclosure; FIG. 13 is a diagram illustrating a coupling of a partition frame and an end frame according to an embodiment of the present disclosure; and FIG. 14 is an enlarged view of main parts illustrating a slide coupling state of the cell carrier according to an embodiment of the present disclosure.

Referring to FIGS. 1 to 14, the cell carrier 300 according to an embodiment may be slidably coupled to the partition frame 400. In an embodiment, the partition frame 400 may be formed to have a length corresponding to the number of the battery cells 201.

In the interior of the housing 100, a plurality of partition frames 400 may be disposed in the second direction to form a space in which the cell carrier 300 may be slidably coupled.

The cell carrier 300 may be slidably coupled by a slide portion 500 in a longitudinal direction of the partition frame 400. The slide portion 500 may include a slide rail 510 formed in the longitudinal direction of the partition frame 400 and a slide groove 520 formed in the second surface 320 of the cell carrier 300 to be inserted into the slide rail 510.

The slide rail 510 may be formed of a plurality of slide rails 510 disposed to be spaced apart from each other on the partition frame 400, and the slide groove 520 may be formed of a plurality of slide grooves 520 disposed to be spaced apart from each other on the second surface of the cell carrier 300 to correspond to the slide rail 510. The slide rails 510 may be formed at upper and lower end portions of the partition frame 400, and the slide grooves 520 may also be formed at upper and lower end portions of the second surface 320 of the cell carrier 300 to correspond to the slide rails 510. The cell carrier 300 may be guided in a straight line without eccentricity when slidably inserted into by the slide rails 510 and the slide grooves 520 formed in two rows.

In this way, a certain number of the cell carriers 300 are slidably inserted into the partition frame 400 to form the cell stack 200, and an end frame 450 is coupled to an end portion of the partition frame 400 so that the cell stack 200 may be fixed.

As shown in FIG. 12, a coupling hole 455 into which the end portion of the partition frame 400 is fitted may be formed in the end frame 450. The coupling hole 455 may be formed to pass through the partition frame 400 in a shape that is the same as a cross-sectional shape of the partition frame 400 such that the end portion of the partition frame 400 may be fitted into the coupling hole 455.

The end frame 450 may be provided at each end portion of the partition frame 400 as well as in an intermediate section by being slidably coupled to the partition frame 400.

A certain number of the cell carriers 300 is slidably inserted, the end frame 450 is slidably inserted into a partition frame 400, a certain number of the cell carriers 300 is slidably inserted, and then the end frame 450 is coupled to finish so that a battery pack provided with the plurality of cell stacks 200 may be formed.

That is, the end frame 450 may be slidably coupled not only to the end portion of the partition frame 400 but also to the intermediate portion of the partition frame 400 to partition the cell stack 200.

In an embodiment, the partition frame 400 and the end frame 450 may be formed as hollow tubes. Since the partition frame 400 and the end frame 450 are formed as the hollow tubes with hollow interiors, a heat dissipation effect of the battery cell 201 can be improved.

In the cell carrier 300 slidably coupled to the partition frame 400, a pocket portion 600 is formed by the opening 301 such that cooling efficiency can be improved.

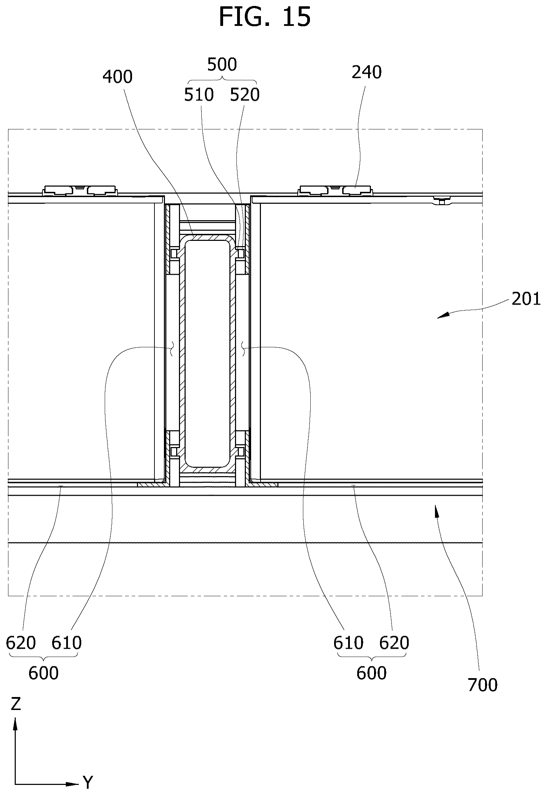

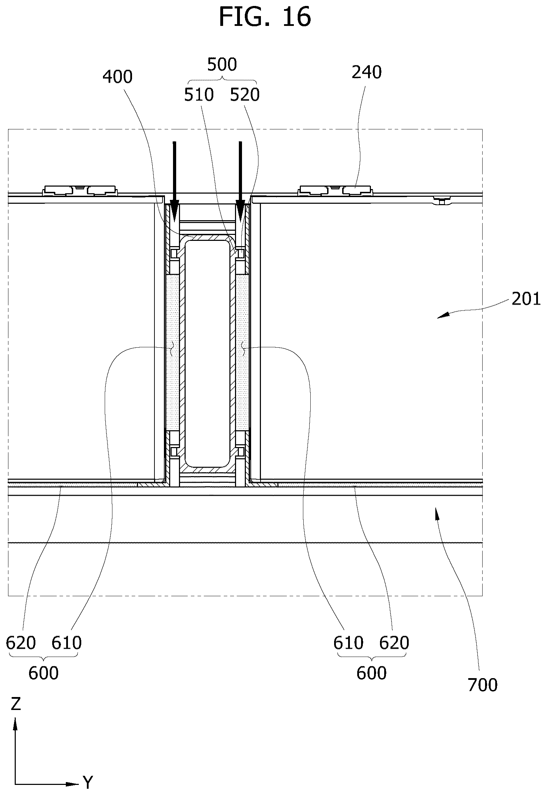

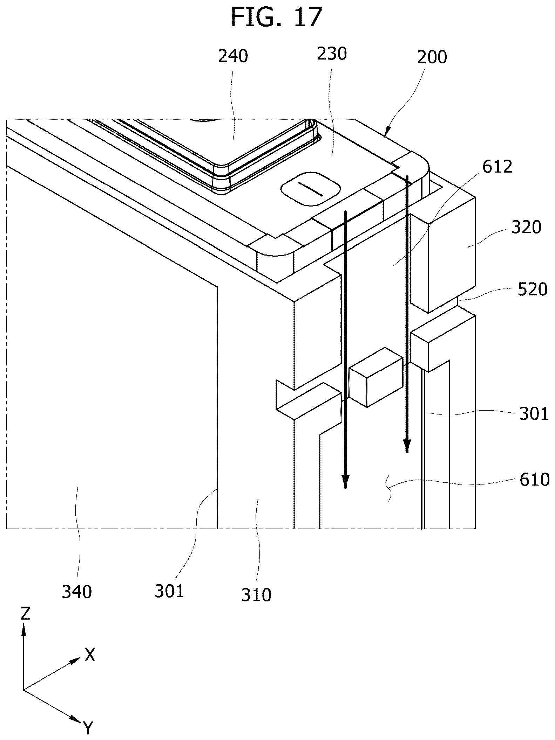

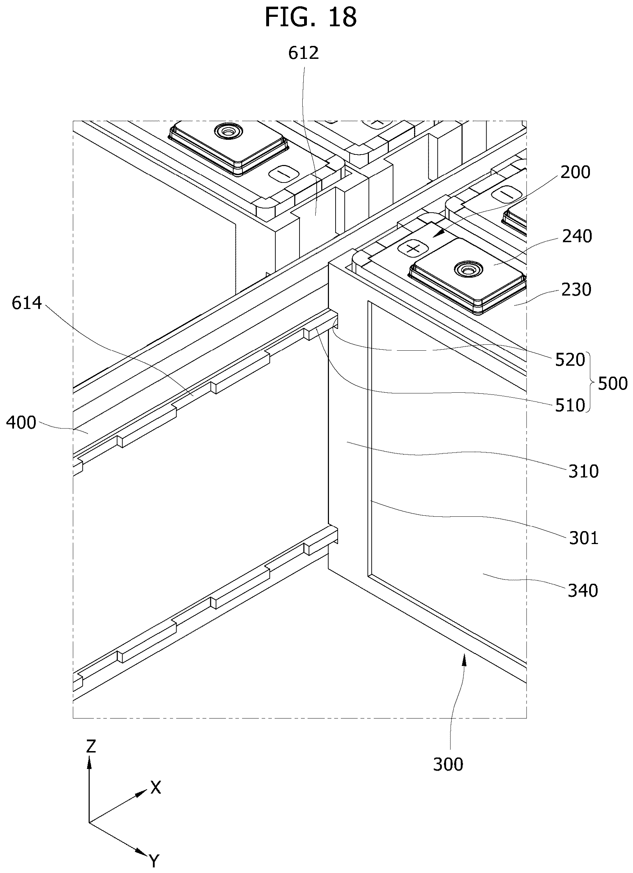

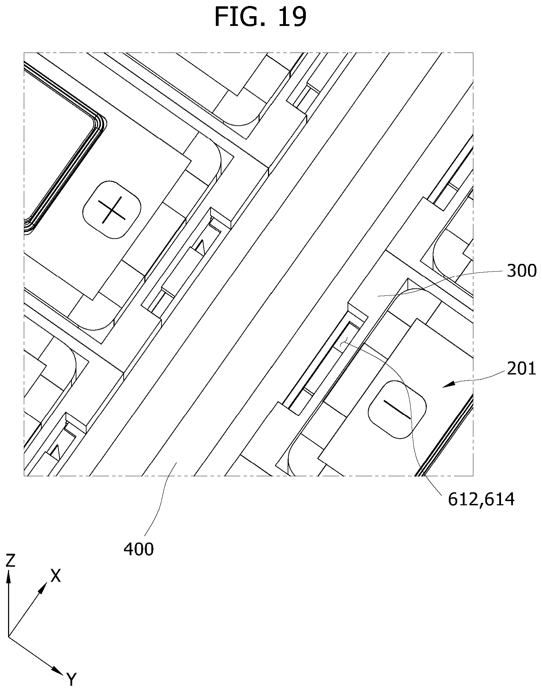

FIG. 15 is a schematic cross-sectional view illustrating a pocket portion according to an embodiment of the present disclosure; FIG. 16 is a schematic diagram illustrating filling with a filler according to an embodiment of the present disclosure; FIG. 17 is an enlarged view of main parts illustrating an inlet of the cell carrier according to an embodiment of the present disclosure; FIG. 18 is a schematic diagram illustrating a slide rail of the partition frame according to an embodiment of the present disclosure; and FIG. 19 is a diagram illustrating an incised groove for filling with the filler according to an embodiment of the present disclosure.

Referring to FIGS. 1 to 19, a first pocket portion 610 filled with a filler through the opening 301 of the second surface 320 may be formed between the cell carrier 300 and the partition frame 400 according to an embodiment.

In an embodiment, the second surface 320 of the cell carrier 300 is in contact (e.g., close contact) with the side surface of the partition frame 400, and a first pocket portion 610 may be formed by the opening 301 formed in the second surface 320. In an embodiment, the first pocket portion 610 is a space formed by the shape of the opening 301 of the second surface 320 and the thickness of the cell carrier 300, and the first pocket portion 610 may be filled with a filler.

A second pocket portion 620 filled with a filler through the opening 301 of the third surface 330 may be formed between the cell carrier 300 and the housing 100. The second pocket portion 620 is a space formed by the shape of the opening 301 of the third surface 330 and the thickness of the cell carrier 300, and the second pocket portion 620 may also be filled with a filler.

An inlet 612 for filling the first pocket portion 610 with a filler may be formed in the second surface 320 of the cell carrier 300. The inlet 612 is formed as a groove recessed into the second surface 320. That is, the inlet 612 is formed as a groove connecting the upper portion of the cell carrier 300 and the first pocket portion 610, and the first pocket portion 610 may be filled with a filler through the inlet 612 as shown in FIG. 17.

In this case, referring to FIG. 19, an incised groove 614 corresponding to the inlet 612 may be formed in the slide rail 510. The incised groove 614 may prevent or substantially prevent interference with the slide rail 510 when filling the filler, thereby enabling a smooth inflow of the filler.

In addition, a communication portion 622 connecting the first pocket portion 610 and the second pocket portion 620 may be formed in the cell carrier 300. The communication portion 622 may be formed as a groove that is recessed into the second surface 320 and the third surface 330 and is interconnected. In an embodiment, as shown in FIGS. 15 and 16, the communication portion 622 is formed as a groove in an "L" shape through the second surface 320 and the third surface 330, and the filler filling through the inlet 612 may fill into the second pocket portion 620 through the communication portion 622 via the first pocket portion 610.

The filler according to an embodiment may be silicone. That is, the first pocket portion 610 and the second pocket portion 620 may be filled with liquid-phase silicone through the inlet 612.

In an embodiment, the filler is made as silicone, but the present disclosure is not limited thereto, and the filler may be made of any of various materials that have thermal conductivity, flexibility to fill a gap, electrical insulation, and impact absorption.

In this case, a cooling plate 700 may be provided at a lower portion of the housing 100. The cooling plate 700 is a heat management device used to effectively remove heat from the battery cell 201. A cooling channel is formed inside the cooling plate 700 such that cooling water or a refrigerant may flow and may exchange heat with the battery cell 201 to cool the heat generated in the battery cell 201.

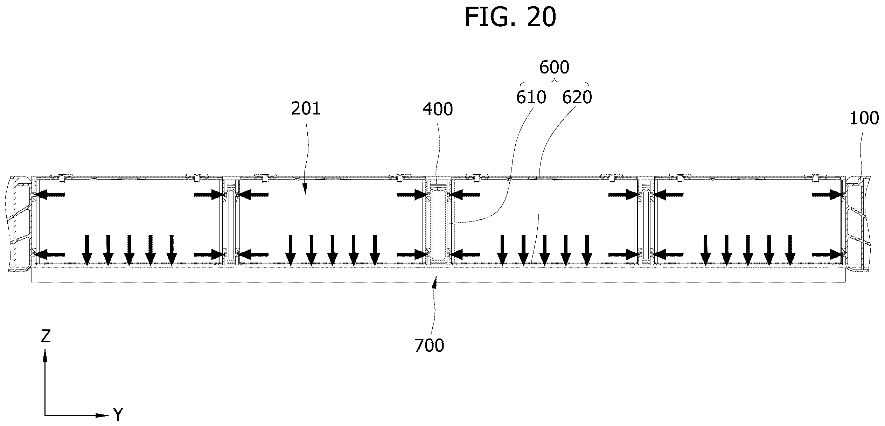

FIG. 20 is a schematic diagram illustrating heat transfer of the battery pack according to an embodiment of the present disclosure.

Referring to FIG. 20, the cooling plate 700 of an embodiment may be in direct contact with the second pocket portion 620 to exchange heat, and the second pocket portion 620 is connected to the first pocket portion 610 such that cooling of the cooling plate 700 may cool the fillers of the second pocket portion 620 and the first pocket portion 610, thereby absorbing the heat generated in the battery cell 201.

Herein, a process of forming a battery pack according to an embodiment of the present disclosure will be described.

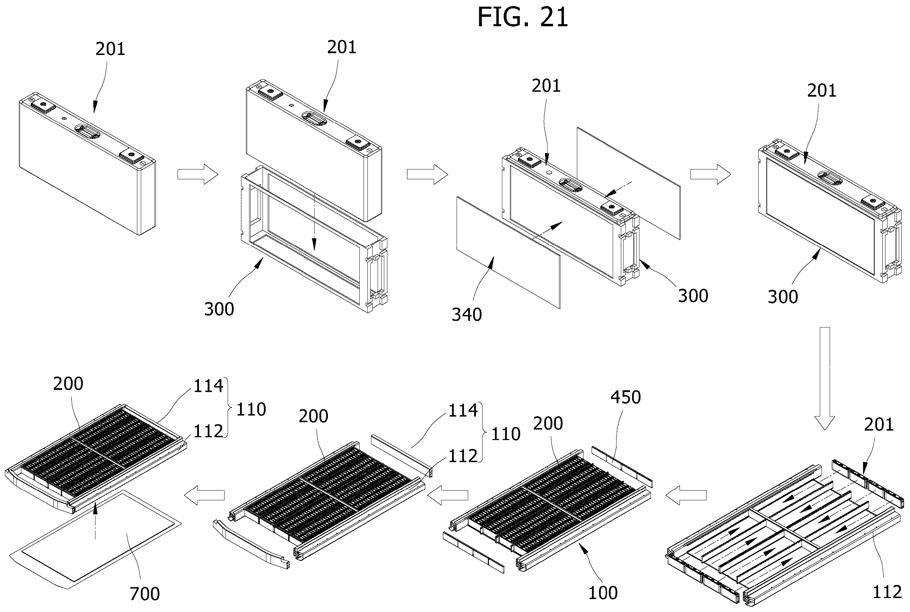

FIG. 21 is a schematic diagram illustrating a process of forming the battery pack according to an embodiment of the present disclosure.

Referring to FIGS. 1 to 21, the battery cell 201 is inserted into the cell carrier 300. The cell carrier 300 may be formed in a rectangular parallelepiped shape that surrounds the corners of the battery cell 201, and the battery cell 201 may be inserted into the upper portion of the cell carrier 300. Then, the insulating member 340 may be attached through the opening 301 formed in the first surface 310 of the cell carrier 300.

In addition, the housing 100 is formed for stacking the cell carrier 300 in which the battery cell 201 is accommodated. The side frames 112 are disposed at regular intervals, a plurality of partition frames 400 are disposed at intervals corresponding to a width of the cell carrier 300 inside the side frames 112 in the second direction, and the end frame 450 is disposed at the center of the partition frame 400 in a direction intersecting the longitudinal direction of the partition frame 400.

Thereafter, the cell carrier 300 may be slidably inserted into a space formed by the partition frame 400 through the slide portion 500. In an embodiment, the slide rails 510 are formed at the upper and lower ends of the side surface of the partition frame 400 in the longitudinal direction of the partition frame 400, and the slide grooves 520 corresponding to the slide rails 510 are formed in the second surface 320 of the cell carrier 300 such that each cell carrier 300 may be slidably inserted and stacked sequentially.

When a certain number of the cell carriers 300 are inserted, the end frame 450 may be coupled and fixed to each end of the partition frame 400. In an embodiment, as described above, the coupling hole 455 corresponding to the cross-sectional shape of the partition frame 400 is formed in the end frame 450, and the end portion of the partition frame 400 may be coupled and fixed to the coupling hole 455 by welding.

Thereafter, the front frame 113 is coupled to one side of the side frame 112, the rear frame 114 is coupled to the other side of the side frame 112, and a cooling plate 700 is coupled to the lower portion of the housing 100 such that the battery pack may be formed.

In an embodiment, as described above, the assembled battery pack may be filled with a filler to improve heat cooling efficiency.

In an embodiment, the filler is made of silicone and may fill through the inlet 612 formed in the second surface 320 of the cell carrier 300. The first pocket portion 610 and the second pocket portion 620 may be filled with the filler filling through the inlet 612. This is possible by the communication portion 622 that communicates the first pocket portion 610 and the second pocket portion 620.

The first pocket portion 610 and the second pocket portion 620 may absorb heat generated in the battery cell 201. The cooling of the cooling plate 700 may cool the fillers of the second pocket portion 620 and the first pocket portion 610, thereby absorbing the heat generated in the battery cell 201.

According to one or more embodiments of the present disclosure, various types of packs can be implemented with a single housing, and a battery pack adjustable according to required energy can be implemented.

According to one or more embodiments of the present disclosure, by maximizing or increasing cooling performance by the cell carrier, if an event occurs, heat diffusion can be prevented or substantially prevented through a reduction in the amount of heat transfer to adjacent battery cells and lifetime performance can be improved.

In one or more embodiments, a pocket portion formed by the cell carrier is filled with a filler, and heat conduction of a cooling plate is facilitated such that heat generated in the battery cell can be absorbed and cooling performance can be maximized or increased.

According to one or more embodiments of the present disclosure, the manufacture of the battery pack is facilitated by a structure of being slidably coupled in a longitudinal direction of the partition frame.

However, aspects and effects obtainable through the present disclosure are not limited to the above aspects and effects, and other aspects and technical effects that are not mentioned will be clearly understood by those skilled in the art from the description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

Therefore, the technical scope of the present disclosure should be defined by the claims.

Embodiments are set out in the following clauses:
1. A cell stack comprising:
   a plurality of battery cells; and
   a cell carrier, the plurality of battery cells being accommodated in the cell carrier and arranged such that adjacent battery cells of the plurality of battery cells are spaced apart from each other in a first direction,
   wherein the cell carrier surrounds a corner of a battery cell of the plurality of battery cells.
2. The cell stack according to clause 1, wherein the cell carrier comprises:
   first surfaces spaced apart from each other in the first direction to correspond to front and rear surfaces of the battery cell;
   a second surface formed in a direction perpendicular to the first surfaces to connect the first surfaces; and
   a third surface supporting a bottom surface of the battery cell,
   wherein openings are formed in the first surfaces, the second surface, and the third surface.
3. The cell stack according to clause 2, further comprising insulating members attached to the front and rear surfaces of the battery cell through the openings formed in the first surfaces.
4. A battery pack comprising:
   a housing;
   one or more cell stacks accommodated in the housing and each comprising a plurality of battery cells arranged in a first direction;
   a plurality of partition frames arranged in parallel such that the cell stacks are arranged in the first direction; and
   an end frame coupled to the partition frames and facing the cell stacks in the first direction.
5. The battery pack according to clause 4, further comprising a cell carrier arranged along a perimeter of the battery cells such that the battery cells are spaced apart from each other.
6. The battery pack according to clause 5, wherein the cell carrier comprises:
   first surfaces spaced apart from each other in the first direction to correspond to front and rear surfaces of a battery cell of the battery cells;
   a second surface extending in a direction perpendicular to the first surface to connect the first surfaces; and
   a third surface supporting a bottom surface of the battery cell,
   wherein openings are formed in the first surfaces, the second surface, and the third surface.
7. The battery pack according to clause 6, further comprising a first pocket portion that is filled with a filler through the opening of the second surface and located between the cell carrier and the partition frame.
8. The battery pack according to clause 7, further comprising a second pocket portion that is filled with the filler through the opening of the third surface and located between the cell carrier and the housing.
9. The battery pack according to clause 8, further comprising a cooling plate arranged at a lower portion of the housing.
10. The battery pack according to clause 8 or 9, wherein an inlet for filling the first pocket portion with the filler is defined in the second surface of the cell carrier.
11. The battery pack according to clause 10, wherein a communication hole configured to communicate the first pocket portion and the second pocket portion is defined in the cell carrier.
12. The battery pack according to clause 11, wherein the filler comprises silicone.
13. The battery pack according to any one of clauses 6 to 12, further comprising insulating paper attached to each of the front and rear surfaces of the battery cell through the openings formed in the first surfaces.
14. The battery pack according to any one of clauses 4 to 13, wherein the end frame and the partition frame are configured as hollow tubes.
15. The battery pack according to any one of clauses 4 to 14, wherein a coupling hole to which the partition frame is slidably coupled is defined in the end frame.

## Claims

1. A cell stack comprising:
a plurality of battery cells; and
a cell carrier, the plurality of battery cells being accommodated in the cell carrier and arranged such that adjacent battery cells of the plurality of battery cells are spaced apart from each other in a first direction,
wherein the cell carrier surrounds a corner of a battery cell of the plurality of battery cells.

2. The cell stack as claimed in claim 1, wherein the cell carrier comprises:
first surfaces spaced apart from each other in the first direction to correspond to front and rear surfaces of the battery cell;
a second surface formed in a direction perpendicular to the first surfaces to connect the first surfaces; and
a third surface supporting a bottom surface of the battery cell,
wherein openings are formed in the first surfaces, the second surface, and the third surface.

3. The cell stack as claimed in claim 2, further comprising insulating members attached to the front and rear surfaces of the battery cell through the openings formed in the first surfaces.

4. A battery pack comprising:
a housing;
one or more cell stacks accommodated in the housing and each comprising a plurality of battery cells arranged in a first direction;
a plurality of partition frames arranged in parallel such that the cell stacks are arranged in the first direction; and
an end frame coupled to the partition frames and facing the cell stacks in the first direction.

5. The battery pack as claimed in claim 4, further comprising a cell carrier arranged along a perimeter of the battery cells such that the battery cells are spaced apart from each other.

6. The battery pack as claimed in claim 5, wherein the cell carrier comprises:
first surfaces spaced apart from each other in the first direction to correspond to front and rear surfaces of a battery cell of the battery cells;
a second surface extending in a direction perpendicular to the first surface to connect the first surfaces; and
a third surface supporting a bottom surface of the battery cell,
wherein openings are formed in the first surfaces, the second surface, and the third surface.

7. The battery pack as claimed in claim 6, further comprising a first pocket portion that is filled with a filler through the opening of the second surface and located between the cell carrier and a partition frame of the plurality of partition frames.

8. The battery pack as claimed in claim 7, further comprising a second pocket portion that is filled with the filler through the opening of the third surface and located between the cell carrier and the housing.

9. The battery pack as claimed in claim 8, further comprising a cooling plate arranged at a lower portion of the housing.

10. The battery pack as claimed in claim 8 or 9, wherein an inlet for filling the first pocket portion with the filler is defined in the second surface of the cell carrier.

11. The battery pack as claimed in claim 10, wherein a communication hole configured to communicate the first pocket portion and the second pocket portion is defined in the cell carrier.

12. The battery pack as claimed in claim 11, wherein the filler comprises silicone.

13. The battery pack as claimed in any one of claims 6 to 12, further comprising insulating paper attached to each of the front and rear surfaces of the battery cell through the openings formed in the first surfaces.

14. The battery pack as claimed in any one of claims 4 to 13, wherein the end frame and the partition frames are configured as hollow tubes.

15. The battery pack as claimed in any one of claims 4 to 14, wherein a coupling hole to which a partition frame of the plurality of partition frames is slidably coupled is defined in the end frame.
